# FASCICULE DE BREVET EUROPEEN

(11) **EP 3 003 697 B1**
(45) Date de publication et mention de la délivrance du brevet: **16.01.2019**
(21) Numéro de dépôt: 14734871.8
(22) Date de dépôt: 06.06.2014
(51) Int. Cl.: B29D 11/00, B29C 67/00

(54) **PROCEDE ET SYSTEME DE FABRICATION D'UNE LENTILLE OPHTALMIQUE**
VERFAHREN UND SYSTEM ZUR HERSTELLUNG EINER OPHTHALMISCHEN LINSE
PROCESS AND SYSTEM FOR MANUFACTURING AN OPHTHALMIC LENS

(30) Priorité: 07.06.2013 FR 1355301
(43) Date de publication de la demande: 13.04.2016
(73) Titulaire: Essilor International, 94220 Charenton-le-Pont (FR)
(72) Inventeur: QUERE, Loïc, F-94220 Charenton-Le-Pont (FR); GOURRAUD, Alexandre, F-94220 Charenton-Le-Pont (FR); ALLIONE, Pascal, F-94220 Charenton-Le-Pont (FR); BEGON, Cédric, F-94220 Charenton-Le-Pont (FR); LE SAUX, Gilles, F-94220 Charenton-Le-Pont (FR)
(74) Mandataire: Santarelli
(86) Numéro de dépôt international: PCT/FR2014/051363
(87) Numéro de publication internationale: WO 2014/195654

(56) Documents cités:
- US-A1- 2002 147 521
- US-A1- 2005 104 240
- US-A1- 2009 161 071
- US-A1- 2009 225 435

## Description

### DOMAINE DE L'INVENTION

L'invention concerne le domaine de la fabrication des lentilles ophtalmiques présentant au moins une fonction optique, par exemple des lentilles ophtalmiques progressives.

L'invention concerne plus particulièrement un procédé de fabrication de telles lentilles ophtalmiques.

L'invention concerne également un système de fabrication configuré pour fabriquer une telle lentille ophtalmique.

### ARRIERE-PLAN TECHNOLOGIQUE

On sait que les lentilles ophtalmiques sont soumises à différentes étapes de fabrication afin de leur apporter les propriétés ophtalmiques prescrites.

On connaît des procédés de fabrication de lentilles ophtalmiques qui comportent une étape de fourniture d'un palet brut ou semi-fini, c'est-à-dire un palet n'ayant aucune ou ayant une seule face dite finie (autrement dit une face qui définit une surface optique simple ou complexe).

Ces procédés comportent ensuite une ou plusieurs étapes d'usinage d'au moins une face du palet dite brute, pour obtenir une face dite finie, définissant la surface optique recherchée pour fournir les propriétés ophtalmiques (complexes ou non) prescrites au porteur de la lentille ophtalmique.

On entend par une ou plusieurs étapes d'usinage les étapes dites d'ébauche, de finition et de polissage (usinage par surfaçage).

L'étape d'ébauche permet, partant d'un palet brut ou semi-fini, de lui donner l'épaisseur et les rayons de courbure de la surface sur la ou les faces dites non finies du palet, tandis que l'étape de finition (appelée aussi doucissage) consiste à affiner le grain voire la précision des rayons de courbure des faces obtenues précédemment et permet de préparer (doucir) la ou les surfaces courbes générées pour l'étape de polissage. Cette étape de polissage est une étape de surfaçage de la ou des surfaces courbes doucies ou ébauchées, et permet de rendre la lentille ophtalmique transparente. Les étapes d'ébauche et de finition sont des étapes qui imposent l'épaisseur de la lentille finale et les rayons de courbures de la surface traitée indépendamment de l'épaisseur de l'objet initiale et de ses rayons de courbures initiales.

On notera qu'une surface optique complexe, appelée "free form surfacing" ou "digital surfacing" en anglais, nécessite un usinage particulièrement précis, une telle surface combinant par exemple un tore et une progression. L'usinage d'une telle surface optique complexe est réalisé à l'aide d'au moins une machine d'usinage de très haute précision au moins pour l'étape d'ébauche, voire pour l'étape de finition et de polissage, et d'un polissoir capable de polir la ou les surfaces issues des étapes précédentes, sans déformer la lentille ophtalmique.

La demande de brevet US 2009/161071 divulgue de manière générale différentes technologies pour obtenir des verres de lunettes dont la correction est optimisée sur tout le verre ; dont l'usinage d'un palet, l'utilisation de couches de matériaux à indices variables dans un substrat, le dépôt par impression de matériaux de différents indices de réfraction sur la surface d'un verre, la stéréolithographie combinée à un moulage par casting, et encore plus généralement la combinaison de l'une quelconque de ces technologies. En particulier, il est décrit qu'un tel verre de lunette peut être obtenu par usinage d'une surface complexe de ce verre réalisé en un matériau à indice de réfraction variable. La demande de brevet US 2002/147521 vise un système de fabrication de prototypes multi machines, et la demande de brevet US 2009/225435 vise la fabrication de lentilles optiques pour des applications de photo et d'imagerie.

### OBJET DE L'INVENTION

L'invention vise à fournir un procédé de fabrication d'une lentille ophtalmique présentant au moins une fonction optique, qui soit particulièrement simple, commode et économique à mettre en oeuvre, et qui soit capable également de fournir de façon rapide et flexible des lentilles présentant une géométrie et des caractéristiques matériaux très diverses, répondant à une logique de personnalisation de masse.

L'invention a ainsi pour objet, sous un premier aspect, un procédé de fabrication d'une lentille ophtalmologique présentant les caractéristiques de la revendication 1.

Le procédé de fabrication selon l'invention repose sur la combinaison de deux étapes de fabrication, à savoir l'étape de fabrication de manière additive et l'étape de fabrication de manière soustractive, et sur la mise en oeuvre de l'étape de fabrication de manière additive en fonction de la séquence prédéterminée d'au moins une étape de la fabrication soustractive, celle-ci entrant dans la détermination de la consigne de fabrication de l'étape de fabrication additive.

Les techniques de fabrication additive sont particulièrement pertinentes pour répondre à l'objectif de l'invention.

Par fabrication additive on entend selon la norme internationale ASTM 2792-12, des techniques de fabrication comprenant un procédé de joindre des matériaux pour fabriquer des objets à partir de données de modélisation 3D (typiquement un fichier de CAO - conception assistée par ordinateur) usuellement couche par couche, en opposition aux méthodologies de fabrication soustractive, telle que l'usinage traditionnel.

Les technologies de fabrication additives consistent à fabriquer des objets en juxtaposant des éléments de matières solides en accord avec un agencement prédéfini sous forme numérique dans un fichier de CAO.

Ces éléments de volume élémentaires dénommés « voxels » peuvent être crées et juxtaposés selon une variété de principes techniques différents, par exemple, par dépose de gouttes de monomères photopolymérisables au moyen d'une buse d'impression, par photopolymérisation sélective avec une source UV à la surface d'un bain de monomère (technique de stéréolithographie), ou par fusion de poudre polymère (SLM, Selective Laser Melting ou SLS Selective Laser Sintering).

Les techniques de fabrication additive autorisent une très grande souplesse de définition géométrique des objets, mais soulèvent plusieurs problèmes dès lors que l'on s'intéresse à la fabrication de lentilles ophtalmiques transparentes qui ne diffusent pas la lumière et fournissent une prescription optique avec une géométrie de dioptre très précise sur chaque face de la lentille, ces dioptres pouvant être sphériques, ou pseudo-sphérique, ou sphéro-toriques, ou pseudo-sphéro-toriques.

On relève notamment les problèmes suivants :
- la construction voxel par voxel se prête mal à l'obtention de surfaces lisses qui sont nécessaires pour les applications optiques ;
- les techniques de construction additive rendent difficile la maitrise des caractéristiques dimensionnelles de l'élément produit avec la précision pour une application optique ; en particulier il est difficile d'obtenir la maitrise locale du rayon de courbure de la lentille avec une excellente précision.

On observera que l'invention tient compte de ces problèmes inhérents à la fabrication de manière additive afin de la rendre compatible pour la fabrication d'une lentille ophtalmique.

On notera que l'étape de fabrication additive permet de fournir un élément optique intermédiaire ayant une homogénéité de volume désirée et au moins une partie de la fonction optique adaptée au porteur, et l'étape de fabrication soustractive, qui est postérieure à l'étape de fabrication additive, permet de finaliser la fonction optique désirée et de fournir une lentille ophtalmique présentant une qualité d'état de surface pouvant être caractérisée par des paramètres de rugosité, à partir de l'élément optique intermédiaire.

L'étape de fabrication de manière additive permet ainsi de fournir une élément optique intermédiaire comprenant la lentille ophtalmique cible et comprenant, sur tout ou partie de sa future surface externe, une surépaisseur, la surépaisseur étant définie en tenant compte des capacités optimisées d'élimination de matière des moyens pour réaliser l'étape de fabrication de manière soustractive.

Ainsi, l'étape de déterminer la consigne de fabrication de l'élément optique intermédiaire, en se basant sur la séquence prédéterminée susmentionnée, permet de prendre en considération la capacité d'enlèvement de matière (autrement dit l'épaisseur qui peut être enlevée à l'élément optique intermédiaire) dont dispose un système de fabrication pourvu d'une ou de plusieurs machines de fabrication soustractive, étant entendu que cette capacité est comprise dans l'intervalle de valeurs prédéterminé [1µm ; 2000 µm].

La surépaisseur peut varier en fonction de la position par rapport à la surface de la lentille ophtalmique finale.

La surépaisseur a préférentiellement une moyenne inférieure ou égale à 1000 µm, de façon à pouvoir être usinée au moyen d'une étape de finition ou de poli, sans étape d'ébauche. De façon encore préférentielle, la surépaisseur est en moyenne comprise dans l'intervalle de valeur prédéterminé [30 µm et 500 µm]

La combinaison de ces deux étapes de fabrication forme un procédé dit hybride qui permet avantageusement d'obtenir une lentille ophtalmique présentant à la fois une fonction optique juste, parfaitement ajustée aux besoins du porteur, ainsi qu'une qualité d'état de surface compatible avec des applications ophtalmiques.

Par fonction optique juste, on entend une fonction optique présentant une marge d'erreur pouvant atteindre +/- 0,12 dioptries en certains points de la lentille ophtalmique par rapport à la prescription fournie par le porteur.

Par qualité de surface compatible avec des applications ophtalmiques, on entend une qualité de surface permettant de garantir un taux de transmission de la lentille ophtalmique, dans le spectre de la lumière visible (380/700 nm) supérieur à 85% et un taux de diffusion inférieur à 1%.

Le procédé de fabrication selon l'invention est particulièrement simple, commode et économique, surtout dans un contexte où la diversité des fonctions optiques à réaliser est importante (du fait de la personnalisation de ces fonctions optiques), nécessitant des procédés de fabrication rapides et flexibles.

On notera que la fabrication additive correspond, par exemple, à un procédé d'impression tridimensionnelle mettant en oeuvre par exemple un jet de matière polymère (inkjet printing), ou de stéréolithographie, ou de stéréolithographie par projection de masque, ou de frittage ou de fusion sélective par laser (SLS et SLM en anglais pour respectivement Selective Laser Sintering et Selective Laser Melting,) ou encore d'extrusion par fil thermoplastique, tandis que la fabrication soustractive correspond à un procédé d'usinage, celui-ci comprenant au moins une étape choisie parmi une étape d'ébauche, une étape de finition et une étape de polissage.

On notera également que au sens de l'invention, on entend par :
- étape d'ébauche, l'étape consistant à usiner l'élément optique intermédiaire, au moyen par exemple d'une fraise ou d'un outil diamanté, pour lui donner l'épaisseur et les rayons de courbure de la lentille ophtalmique cible ou proche de la lentille ophtalmique cible ;
- étape de finition, l'étape consistant à affiner le grain, et/ou affiner les rayons de courbure au moyen par exemple d'un outil diamanté ou d'un outil à surface abrasive, de la surface de l'élément optique intermédiaire, afin de le rendre apte à subir une étape de polissage ;
- étape de polissage, l'étape consistant à donner à l'élément optique intermédiaire, une transparence de la lentille ophtalmique cible ; cette étape permet d'éliminer les traces de l'ébauche et de la finition ; elle est réalisée, notamment au moyen d'un polissoir plus souple et d'une solution abrasive de grain plus fin, que ceux pouvant être mis en oeuvre dans une étape de finition ; cette étape est également connue sous le nom de « polissage souple » ; en particulier, la courbure de la correction principale, sphérique ou torique (ou pseudo-sphérique ou pseudo-torique), dite base, ou la courbure d'une addition, pouvant être ajoutée dans une zone dite "de vision de près" ne sont pas impactées notablement par l'étape de polissage souple.

Les étapes d'ébauche et de finition sont donc des étapes qui imposent la forme et les courbures de la surface traitée indépendamment de la forme et des courbures de la surface initiale. Il est à noter qu'une autre étape d'usinage possible est le "polissage rigide" utilisant, notamment, un polissoir rigide sphérique ou torique, ainsi qu'une solution abrasive de grain plus fin que celui des solutions abrasives utilisées dans les étapes précédentes, qui par rotation et abrasion de la surface à traiter confère à celle-ci une courbure sphérique ou torique complémentaire de celle du polissoir rigide. Au sens de l'invention « ce polissage rigide » représente une des variantes de l'étape de finition.

On notera également que l'on entend par fonction optique d'une lentille ou d'un élément optique intermédiaire, la réponse optique de cette lentille ou de cet élément, c'est-à-dire une fonction définissant toute modification de propagation et de transmission d'un faisceau optique à travers la lentille ou l'élément optique concerné, quelle que soit l'incidence du faisceau optique entrant et quelle que soit l'étendue géométrique d'un dioptre d'entrée illuminée par le faisceau optique incident.

Plus précisément, dans le domaine ophtalmique, la fonction optique est définie comme la répartition des caractéristiques de puissance porteur, d'astigmatisme, des déviations prismatiques et des aberrations d'ordre supérieur associées à la lentille ou à l'élément optique pour l'ensemble des directions du regard d'un porteur de cette lentille ou de cet élément. Cela suppose bien entendu la prédétermination du positionnement géométrique de la lentille ou de l'élément optique par rapport à l'oeil du porteur.

Selon des caractéristiques préférées, simples, commodes et économiques du procédé selon l'invention :
- la surépaisseur, générée durant l'étape de fabriquer de manière additive conduisant à l'élément optique intermédiaire puis soustrait pendant l'étape fabriquer de manière soustractive conduisant à la lentille ophtalmique cible, est comprise entre 1 µm et 1000 µm inclus, préférentiellement comprise entre 30 µm et 1000 µm inclus ;
- ladite séquence prédéterminée comprend au moins une étape choisie parmi une étape d'ébauche, une étape de finition, et une étape de polissage, seule ou en combinaison ;
- ladite séquence prédéterminée est choisie parmi :
   - une étape d'ébauche réalisée sur l'élément optique intermédiaire conduisant à un élément optique intermédiaire d'état 2, suivie d'une étape de finition réalisée sur ledit élément optique intermédiaire d'état 2 conduisant à un élément optique intermédiaire d'état 3, suivi d'une étape de polissage réalisée sur ledit élément optique intermédiaire d'état 3 conduisant à la lentille ophtalmique cible ; ou
      - une étape de finition réalisée sur l'élément optique intermédiaire conduisant à un élément optique intermédiaire d'état 4, suivie d'une étape de polissage réalisée sur ledit élément optique intermédiaire d'état 4 conduisant à la lentille ophtalmique cible ; ou
      - une étape de polissage réalisée sur l'élément optique intermédiaire conduisant à la lentille ophtalmique cible ;
   - ladite séquence prédéterminée est identique ou différente sur l'ensemble de l'élément optique intermédiaire ;
   - l'étape de fabriquer de manière additive un élément optique intermédiaire comprenant la lentille ophtalmique cible adjoint d'une surépaisseur (Se) est réalisée par le dépôt d'une pluralité d'éléments de volume prédéterminés d'un matériau identique constitutif de la lentille ophtalmique cible et de la surépaisseur ;
   - l'étape de fabriquer de manière additive un élément optique intermédiaire comprenant la lentille ophtalmique cible adjoint d'une surépaisseur (Se) est réalisée par le dépôt d'une pluralité d'éléments de volume prédéterminés d'au moins deux matériaux différents, les matériaux différants notamment soit de par leur indice de réfraction, soit de par leur propriété intrinsèque d'abrasabilité ;
   - ladite étape de déterminer une consigne de fabrication dudit élément optique intermédiaire comporte les étapes suivantes :
      - déterminer des caractéristiques géométriques cibles de ladite lentille ophtalmique à partir de caractéristiques de ladite fonction optique à apporter à ladite lentille ophtalmique ;
      - déterminer ladite surépaisseur, à partir desdites caractéristiques géométriques cibles déterminées et de caractéristiques liées à ladite séquence prédéterminée de fabrication soustractive ; et
   - déduire des caractéristiques géométriques dudit élément optique intermédiaire à partir desdites caractéristiques géométriques cibles déterminées et de ladite surépaisseur déterminée ;
   - l'étape de déterminer ladite surépaisseur comprend en outre la prise en compte de données physiques matériaux liées à ladite séquence prédéterminée de fabrication soustractive ;
   - ladite fonction optique à apporter à ladite lentille ophtalmique est caractéristique de valeurs de prescription liées à un porteur de ladite lentille ophtalmique et de données complémentaires de port d'une monture prédéterminée et/ou de personnalisation, et/ou de forme de la monture ;
   - l'élément optique intermédiaire a un contour sensiblement égal à un contour configuré pour être introduit dans une monture prédéterminée ; et/ou
   - après l'étape de fabriquer de manière soustractive, un vernis ou un film est déposé sur la surface de la lentille finale.

L'invention a aussi pour objet, sous un deuxième aspect, un système de fabrication d'une lentille ophtalmique, comportant une machine de fabrication additive, au moins une machine de fabrication soustractive, pour fabriquer une lentille ophtalmique et au moins une unité de contrôle et de commande pourvue d'éléments systémiques configurés pour exécuter un programme d'ordinateur comportant des instructions configurées pour mettre en oeuvre chacune des étapes du procédé exposé ci-dessus.

Avantageusement dans le système de fabrication selon l'invention :
- il est prévu en outre une machine de vernissage configuré pour déposer un vernis sur l'élément issu de la machine de fabrication soustractive ; et/ou
- la machine de fabrication additive comporte un support de fabrication, lequel support de fabrication est amovible et configuré pour servir de support de fabrication pour la machine de fabrication soustractive.

Il est à noter que selon une variante de l'invention, les étapes de fabrications de manière additive puis soustractive peuvent être suivies du dépôt d'un film de vernis choisi afin de pallier des irrégularités de surface. En particulier il est ici fait référence à des couches de vernis telles que celles présentées dans les demandes de brevets EP1896878 de la demanderesse, ou JP 2002-182011 qui sont configurées pour permettre à une surface ayant une certaine qualité initiale d'atteindre une qualité ophtalmique, comme le polissage souple, l'application de cette couche de vernis ne permettant pas de modifier les courbures principales de la surface de la lentille, telles que la courbure principale ou un motif dessinant la ou les additions.

### BREVE DESCRIPTION DES DESSINS

On va maintenant poursuivre l'exposé de l'invention par la description d'un exemple de réalisation, donnée ci-après à titre illustratif et non limitatif, en référence aux dessins annexés sur lesquels :
- la figure 1 représente schématiquement un système de fabrication pourvu d'une machine de fabrication additive et d'une machine d'usinage par tournage configurées pour réaliser une lentille ophtalmique ;
- les figures 2 et 3 représentent schématiquement différentes étapes de fabrication d'une lentille ophtalmique respectivement selon deux modes de réalisation distincts, à l'aide du système illustré sur la figure 1 ;
- la figure 4 est un schéma-blocs illustrant différentes étapes de fonctionnement d'un procédé de fabrication d'une lentille ophtalmique, dont les étapes illustrées sur les figures 2 et 3, à savoir une étape de fabrication additive d'un élément optique intermédiaire et une étape de fabrication soustractive par surfaçage d'une lentille ophtalmique à partir de l'élément optique intermédiaire ;
- les figures 5 et 6 sont des schéma-blocs montrant respectivement l'étape de fabrication additive de l'élément optique intermédiaire et l'étape de fabrication par surfaçage de la lentille ophtalmique ; et
- la figure 7 représente schématiquement une étape de fabrication d'une lentille ophtalmique à l'aide du système illustré sur la figure 1.

### DESCRIPTION DETAILLEE D'UN EXEMPLE DE REALISATION

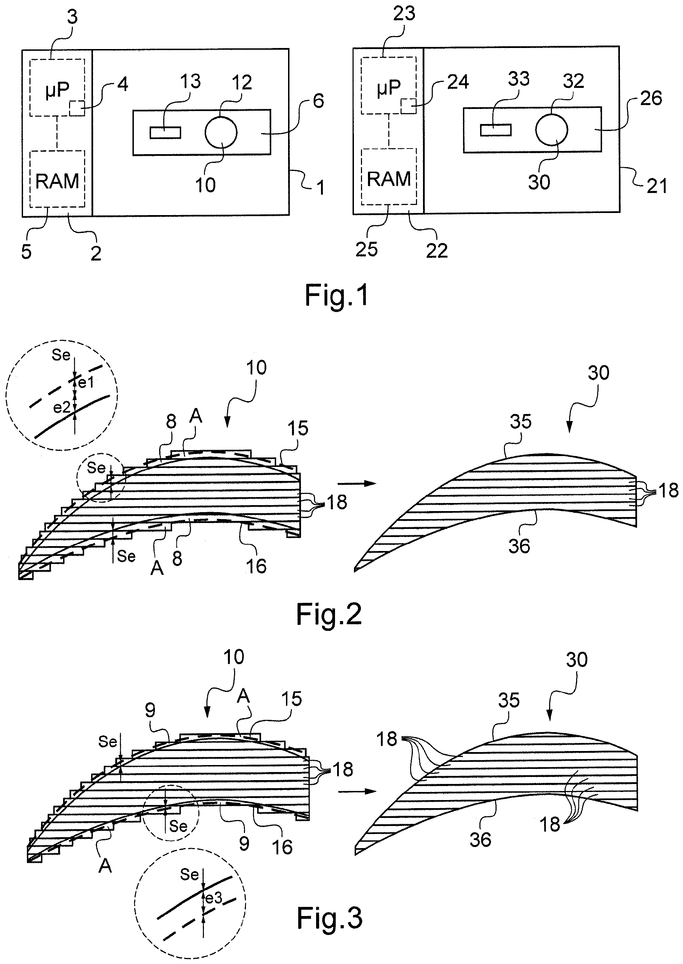

La figure 1 illustre un système de fabrication d'une lentille ophtalmique, comportant une machine de fabrication additive 1, ici une machine d'impression tridimensionnelle à commande numérique, et une machine de fabrication soustractive 21, par exemple du type « free form » ou « digital surfacing », ici une machine d'usinage par tournage (ou machine de surfaçage) également à commande numérique.

La commande numérique désigne l'ensemble des matériels et logiciels ayant notamment pour fonction de donner des instructions de mouvement à tous les organes que comportent les machines de fabrication additive 1 et de surfaçage 21.

La machine de fabrication additive 1 est ici configurée pour déposer, par juxtaposition, une pluralité d'éléments de volume prédéterminés formant des couches superposées (autrement dit en couche par couche), d'au moins un matériau sur un support de fabrication 12 pour former un élément optique intermédiaire 10.

Cet élément optique intermédiaire 10 est configuré pour former une lentille ophtalmique cible 30.

Chaque élément de volume prédéterminé est défini par une composition prédéterminée et une taille prédéterminée.

Comme il s'agit ici de fabrication additive et en particulier d'impression tridimensionnelle, on parle également d'élément volumétrique, ou d'élément de volume, appelé aussi voxel (représentatif d'un pixel en trois dimensions).

Cet élément optique intermédiaire 10 est donc porté par le support de fabrication 12.

On notera que ce support de fabrication 12 est un support prédéterminé de la machine de fabrication additive 1 et donc que ses caractéristiques géométriques sont connues et regroupées dans un fichier qui est stocké ou chargé dans une première unité de contrôle et de commande 2 de la machine de fabrication additive 1.

Le support de fabrication 12 de la machine de fabrication additive 1 comporte un corps pourvu d'une surface de fabrication qui présente une géométrie globale indépendante ou dépendante, pour tout ou partie, de la géométrie d'au moins une surface l'objet à réaliser par fabrication additive.

Le support de fabrication 12 peut être amovible et être à même de s'adapter à la machine de fabrication soustractive utilisée en complément de la machine de fabrication additive.

L'ensemble des matériels et logiciels de la machine de fabrication additive 1 est en outre configuré pour donner des instructions de mouvement, de manipulation et de contrôle de matériaux et de dispositifs de polymérisation que comporte cette machine.

La machine de fabrication additive 1 comporte une buse ou une rampe de buses 13 ainsi que la première unité de contrôle et de commande 2, laquelle est pourvue d'un système de traitement de données comportant un microprocesseur 3 muni d'une mémoire 4, notamment non volatile, lui permettant de charger et stocker un logiciel, autrement dit un programme d'ordinateur qui, lorsqu'il est exécuté dans le microprocesseur 3, permet la mise en oeuvre d'un procédé de fabrication additive. Cette mémoire non volatile 4 est par exemple de type ROM (« *Read-Only Memory* » en anglais).

La première unité 2 comporte en outre une mémoire 5, notamment volatile, permettant de mémoriser des données durant l'exécution du logiciel et la mise en oeuvre du procédé de fabrication additive.

Cette mémoire volatile 5 est par exemple de type RAM ou EEPROM (respectivement « *Random Access Memory* » et « *Electrically Erasable Programmable Read-Only Memory* » en anglais).

La machine de fabrication additive 1 comporte de plus une ouverture 6, ici vitrée, configurée pour accéder à l'élément optique intermédiaire 10 fabriqué de manière additive par cette machine 1 sur le support de fabrication 12 de cette dernière.

On notera que pour fabriquer de manière additive l'élément optique intermédiaire 10, on a besoin de connaître précisément certains paramètres de fabrication additive, tels que la vitesse d'avance de la ou des buses 13, l'énergie et la source d'énergie mises en oeuvre, ici une source émettant dans l'ultra-violet pour la machine d'impression tridimensionnelle mais il pourrait s'agir d'un laser dans le cas d'une machine de stéréolithographie ou encore d'une énergie de chauffe dans le cas d'un dépôt à fil tendu appelé aussi extrusion par fil thermoplastique.

On a aussi besoin de connaître précisément le ou les matériaux utilisés et leur état, ici sous forme de photopolymère liquide ou de fil de polymère thermoplastique.

On a aussi besoin de connaître précisément la ou les fonctions optiques simples ou complexes prescrites à la lentille ophtalmique 30, fonction optique qui est caractérisée par une géométrie définie dans un fichier de fabrication caractéristique des propriétés optiques simples ou complexes de la lentille ophtalmique 30. Selon une variante, on a aussi besoin de connaitre des paramètres se personnalisation du porteur, et /ou des paramètres de la géométrie de la monture dédié à recevoir la lentille ophtalmique 30, pour ajuster la fonction optique de la lentille ophtalmique à ses conditions d'utilisation finales.

La connaissance de la fonction optique, ainsi que de certains paramètres de personnalisation et/ou de monture, permet de connaître l'enveloppe géométrique requise pour la lentille ophtalmique 30 et, ainsi, permet de définir une enveloppe externe tridimensionnelle A minimale pour l'élément optique intermédiaire 10. En effet enveloppe externe tridimensionnelle A minimale doit englober la lentille ophtalmique finale ainsi qu'une surépaisseur Se sur tout ou partie de ladite lentille ophtalmique finale.

On rappelle que par fonction optique d'une lentille ou d'un élément optique, on entend la réponse optique de cette lentille ou de cet élément, c'est-à-dire une fonction définissant toute modification de propagation et de transmission d'un faisceau optique à travers la lentille ou l'élément optique concerné, quelle que soit l'incidence du faisceau optique entrant et quelle que soit l'étendue géométrique d'un dioptre d'entrée illuminée par le faisceau optique incident.

Plus précisément, dans le domaine ophtalmique, la fonction optique est définie comme la répartition des caractéristiques de puissance porteur et d'astigmatisme, des déviations prismatiques et des aberrations d'ordre supérieur associées à la lentille ou à l'élément optique pour l'ensemble des directions du regard d'un porteur de cette lentille ou de cet élément. Cela suppose bien entendu la prédétermination du positionnement géométrique de la lentille ou de l'élément optique par rapport à l'oeil du porteur.

On notera également que la puissance porteur est une manière de calculer et d'ajuster la puissance de la lentille ophtalmique, qui se différencie de la puissance frontofocomètre. Le calcul en puissance porteur assure que la puissance perçue par le porteur (c'est-à-dire la puissance du faisceau de lumière qui rentre dans l'oeil), une fois la lentille positionnée dans la monture et portée par le porteur, corresponde à la puissance prescrite. En général, en tout point du verre, notamment au niveau des points de contrôle de vision de loin et de vision de près, pour un verre progressif, la puissance mesurée avec un frontofocomètre se différencie de la puissance porteur. Cependant, la puissance porteur au niveau du centre optique d'une lentille unifocale est généralement proche de la puissance observée avec un frontofocomètre positionné en ce point.

La machine de fabrication soustractive 21 est ici configurée pour usiner par application d'au moins une étape choisie parmi une étape d'ébauche, une étape de finition et une étape de polissage, au moins tout ou partie de l'élément optique intermédiaire 10 fabriqué de manière additive, pour former la lentille ophtalmique cible 30. L'élément optique intermédiaire 10 est porté et maintenu dans une position prédéterminée dans un support de fabrication 32 de la machine 21.

On notera que ce support de fabrication 32 est un support prédéterminé de la machine 21 et donc que ses caractéristiques géométriques et géographiques sont connues et regroupées dans un fichier qui est stocké ou chargé dans une deuxième unité de contrôle et de commande 22 de la machine de fabrication soustractive 21. Ledit support de fabrication peut de façon avantageuse être réalisée lui-même par fabrication de manière additive telle que définie au sens de l'invention.

La machine 21 est ainsi configurée pour usiner tout ou partie de la surface de l'élément optique intermédiaire 10, y compris dans le cas où l'élément optique intermédiaire présente une surface d'un verre progressif, possédant en outre optionnellement des composantes torique et prismatique.

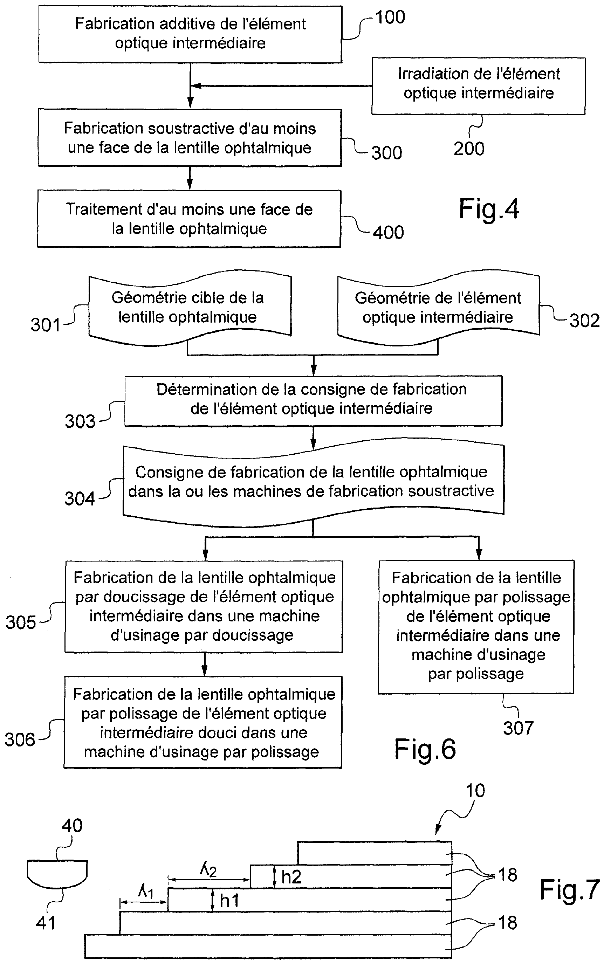

La machine de fabrication soustractive 21 comporte une broche 33 portant un outil de coupe (par exemple un outil diamant monocristallin), dit outil de balayage (figure 7), ainsi que la deuxième unité de contrôle et de commande 22 qui est similaire à la première unité 2 de la machine de fabrication additive 1.

La machine de fabrication soustractive peut comporter, dans le même module ou dans un autre module, des moyens pour réaliser un polissage souple afin de polir et lisser les aspérités et la rugosité de surface présentes à la surface de l'élément optique issue de l'étape d'usinage.

La machine de fabrication soustractive peut également comporter, dans le même module ou dans un autre module, des moyens pour réaliser une étape d'ébauche, tel que par exemple une fraise.

Alternativement, la machine de fabrication soustractive peut ne comporter qu'une machine configurée pour réaliser un polissage souple si la géométrie de l'élément optique intermédiaire est telle qu'un polissage souple est suffisant pour conduire à la géométrie de la lentille ophtalmique finale 30.

Alternativement ou en sus de l'étape de polissage souple, une étape de dépôt de vernis lissant peut être implémentée afin de lisser les aspérités et la rugosité de surface présentes à la surface de l'élément optique issue de l'étape de fabrication de manière soustractive.

Cette deuxième unité 22 est ainsi pourvue d'un système de traitement de données comportant un microprocesseur 23 muni d'une mémoire 24, notamment non volatile, lui permettant de charger et stocker un logiciel, autrement dit un programme d'ordinateur, qui, lorsqu'il est exécuté dans le microprocesseur 23, permet la mise en oeuvre d'un procédé de fabrication soustractive, et plus particulièrement ici une séquence d'au moins une étape d'usinage parmi une étape de de finition et une étape de polissage. Cette mémoire non volatile 24 est par exemple de type ROM (« Read-Only Memory » en anglais).

L'ensemble des matériels et logiciels de la machine de fabrication additive 21 est en outre configuré pour donner des instructions de mouvement et de manipulation de tous les organes que comporte cette machine et notamment de sa broche 33.

La deuxième unité 22 comporte en outre une mémoire 25, notamment volatile, permettant de mémoriser des données durant l'exécution du logiciel et la mise en oeuvre du procédé de fabrication additive.

Cette mémoire volatile 25 est par exemple de type RAM ou EEPROM (respectivement « Random Access Memory » et « Electrically Erasable Programmable Read-Only Memory » en anglais).

La machine de fabrication soustractive 21 comporte de plus une ouverture 26, ici vitrée, configurée pour accéder à la lentille ophtalmique cible 30 fabriquée de manière soustractive par cette machine 21 sur le support de fabrication 32 de cette dernière.

On notera que pour fabriquer de manière soustractive la lentille ophtalmique cible 30 à partir de l'élément optique intermédiaire 10, on a besoin de connaître précisément certains paramètres d'ébauche, de finition et/ou de polissage, tels que par exemple la vitesse de rotation de l'élément optique intermédiaire, la vitesse de balayage, le nombre de balayages, l'amplitude de balayage de l'outil de balayage ou les capacités de lissage de l'outil de polissage, tel que sa fréquence de coupure par exemple.

La figure 2 montre, schématiquement, différentes étapes d'un procédé de fabrication de la lentille ophtalmique cible 30.

Sur la gauche de la figure 2 est représenté l'élément optique intermédiaire 10, fabriqué de manière additive, tandis que sur la droite de cette figure est représentée la lentille ophtalmique cible 30 fabriquée de manière soustractive à partir de cet élément optique intermédiaire 10.

L'élément optique intermédiaire 10 présente un corps pourvu d'une première face 15 qui est ici convexe ainsi qu'une deuxième face 16 qui est ici concave. Cette deuxième face 16, dans ce mode de réalisation ici illustrée, est concave puisque c'est celle qui se trouve en regard de la surface de fabrication sur laquelle l'élément optique intermédiaire 10 est fabriqué de manière additive. Dans le cadre de l'invention, une construction inverse consistant à avoir une deuxième face 16 convexe, peut être réalisée. De même, alternativement la première face 15 peut présenter un profil concave. Le mélange de ces différentes alternatives fait pleinement partie de l'invention.

Cet élément optique intermédiaire 10 comporte une tranche périphérique raccordant la première face 15 à la deuxième face 16.

En effet, l'élément optique intermédiaire 10 a ici été fabriqué directement avec un contour adapté à une forme de monture prédéterminée dans laquelle la lentille ophtalmique cible 30 est configurée pour être montée.

Dans d'autres modes de réalisation, l'élément optique intermédiaire 10 peut avoir une tranche périphérique formant un contour légèrement différent de celui désiré pour la lentille ophtalmique cible 30, par exemple légèrement moins important ou légèrement plus important qu'un contour configuré pour être introduit dans la monture prédéterminée, ou comportant des extensions pour permettre une préhension ou pouvant avoir une autre fonction. Dans le cas où l'élément optique intermédiaire 10 présente une tranche périphérique formant un contour plus important qu'un contour de la tranche de la lentille ophtalmique cible 30, alors on comprendra que ce contour complémentaire fait partie de la surépaisseur Se réalisée lors de l'étape de fabrication additive et qu'il est défini lors de l'étape de déterminer la consigne de fabrication. Dans un cas encore plus particulier, le contour de l'élément optique intermédiaire 10 est exactement celui désiré pour la lentille ophtalmique cible 30.

Dans un cas encore plus particulier, certains au moins des moyens permettant de maintenir la lentille ophtalmique cible dans une monture prédéterminée sont réalisés lors de l'étape de fabrication additive. Ces moyens peuvent être des trous pour fixer des montures nécessitant des verres percés, une rainure pour recevoir un fil de type nylon pour une monture de type "nylor", ou un biseau afin de pouvoir se loger en complémentarité avec une monture de type fermée.

C'est dans l'une de ces situations préférentielles qu'une étape de fabrication soustractive comportant une étape dite d'ébauche en plus d'une étape dite de finition ou de polissage peut être tout particulièrement intéressante économiquement : la possibilité de fabriquer une lentille ophtalmique cible 10 déjà à la forme convenant pour être introduit dans une monture prédéterminée peut permettre de réduire les risques de désalignement des verres pouvant arriver lors de l'étape de détourage qui peut être faite en magasin ou encore cela peut permettre de réduire les stocks de semi-finis actuellement nécessaires.

L'élément optique intermédiaire 10 est ici formé par une pluralité d'éléments de volume prédéterminés qui sont juxtaposés et superposés pour former une pluralité de couches superposées d'un matériau 18. Ces éléments de volume prédéterminées peuvent avoir une géométrie et être différent en volume les uns par rapport aux autres, comme le permet de façon usuelle la mise en oeuvre d'un tel procédé de fabrication par manière additive. Ces éléments de volume de l'invention peuvent également être constitués du même matériau, ou selon une variante avantageuse peuvent être constitué d'au moins deux matériaux différents soit de par leur indice de réfraction, par exemple, soit de par leur propriété d'abrasabilité.

Ainsi l'utilisation d'au moins deux matériaux présentant des indices de réfraction différents sera avantageusement mis en oeuvre pour apporter des propriétés optiques et fonctionnelles optimisées à la lentille ophtalmique cible 30. L'utilisation d'au moins deux matériaux présentant des propriétés d'abrasabilité différentes sera particulièrement intéressante dans la détermination de la consigne de l'étape de fabrication additive, et permettra notamment d'optimiser le dépôt de surépaisseur Se de matériaux le plus adaptée en fonction de la séquence prédéterminée pour la mise oeuvre de l'étape de fabrication soustractive.

Cette pluralité de couches superposées forme le corps ensemble avec la première face 15 et la deuxième face 16 de cet élément optique intermédiaire 10.

On observera que les couches superposées du premier matériau 18 présentent ici des longueurs différentes de manière à former les première et deuxième faces 15 et 16 de cet élément optique intermédiaire 10.

On observera que certaines technologies de fabrication additive n'ont qu'une notion relative de "couches", une couche n'étant alors qu'un ensemble de voxels artificiellement déposés lors d'un même passage de buses ou d'un même masquage. Cependant, l'enseignement de la présente invention se retranscrit aisément à ces technologies.

Ces couches présentent ici chacune une épaisseur sensiblement constante sur la longueur et elles présentent toutes sensiblement la même épaisseur. On observera que certaines technologies de fabrication additive peuvent prévoir des couches avec des épaisseurs variables au long de la couche. Cependant, l'enseignement de la présente invention se retranscrit aisément à ces technologies.

On notera que cette équi-épaisseur est ici obtenue grâce à la dépose contrôlée et commandée, par la buse ou la rampe de buses 13 de la machine de fabrication additive 1, d'une quantité déterminée d'éléments de volume prédéterminés pour chaque couche superposée du matériau 18.

On notera que le matériau 18 est ici un polymère acrylique, et plus précisément un photopolymère, par exemple un photopolymère tel que le produit commercialisé par la société OBJET Ltd, sous la marque VeroClear™.

On notera que la fabrication additive de l'élément optique intermédiaire 10 peut nécessiter, en plus du dépôt de la pluralité de couches successives et superposées, une ou plusieurs étapes de photo-polymérisation. Les étapes de photo-polymérisations peuvent avoir lieu au dépôt de chaque d'élément de volume, de façon globale après le passage de la buse et/ou de la rampe de buse ou après le dépôt de chaque couche de matériau. On notera d'ailleurs, comme on le verra ci-après plus en détail, que la polymérisation de l'élément optique intermédiaire 10 peut ne pas être complètement terminée à la fin de l'étape de fabrication additive de cet élément optique intermédiaire 10.

Le corps de l'élément optique intermédiaire 10 comporte deux surépaisseurs 8 ménagées de part et d'autre du corps au niveau respectivement des première et deuxième faces 15 et 16.

La géométrie de l'élément optique intermédiaire 10, dans le mode illustré ici, est conçue de façon à avoir, pour au moins une face, une surépaisseur Se couvrant l'ensemble de la face 15, par rapport à l'enveloppe géométrique de la lentille ophtalmique cible 30. Cette surépaisseur Se est définie dans l'invention comme la distance entre la surface de l'enveloppe géométrique de la lentille ophtalmique cible et une surface "intérieure" de l'élément optique intermédiaire, c'est-à-dire en particulier une surface définie par les points de chaque couche de la surface de l'élément optique intermédiaire les plus proches localement de la surface de la lentille ophtalmique finale.

Ainsi, localement, la surépaisseur Se varie à minima à la jonction de voxels voisins, ou au niveau de "sauts de marches" entre deux nappes ou couches superposées.

De plus, la surépaisseur Se n'a pas nécessairement une valeur constante en tout point par rapport à l'enveloppe géométrique de la lentille ophtalmique cible 30. En particulier, en certains points de l'élément optique intermédiaire 10 la surépaisseur peut être comprise dans l'intervalle [30 µm, 50 µm] et en d'autres points, la surépaisseur peut être de comprise dans l'intervalle [100 µm, 500 µm] ou même atteindre localement 1 à 2 mm.

Cependant, de préférence sur l'ensemble de l'élément optique intermédiaire 10, la surépaisseur Se est comprise dans l'intervalle [1 µm, 2000 µm]. De préférence, la surépaisseur moyenne sur l'ensemble de la lentille peut être comprise dans l'intervalle [10 µm, 1000 µm], préférentiellement dans l'intervalle [30 µm, 500 µm]. Préférentiellement la surépaisseur est comprise dans l'intervalle [10 µm, 1000 µm], préférentiellement dans l'intervalle [30 µm, 500 µm].

On observera que dans le corps de l'élément optique intermédiaire 10 sont représentées deux lignes en pointillés et deux lignes continues qui suivent chacune sensiblement la forme, en section, des première et deuxième faces 15 et 16 de l'élément optique intermédiaire 10.

Les lignes continue et en pointillés disposées à proximité d'une face respective sont situées à distance l'une de l'autre, laquelle distance correspond à la surépaisseur 8 (Se) respective.

On notera que les lignes continues définissent la géométrie dite cible de la lentille ophtalmique cible 30 à fabriquer tandis que les lignes en pointillés définissent la géométrie de l'élément optique intermédiaire 10 à fabriquer.

La géométrie de l'élément optique intermédiaire 10 à fabriquer de manière additive est déterminée en fonction de la séquence prédéterminée d'au moins une étape d'enlèvement de matière, dite étape d'usinage choisie parmi une étape dite d'ébauche, une étape dite de finition et/ou une étape dite de polissage.

Sur la figure 2, les surépaisseurs 8 apportées aux première et deuxième faces 15 et 16, qui sont aussi référencées Se, sont chacune égale à la somme de deux épaisseurs déterminées, référencées e₁ et e₂ (voir la vue de détail sur la figure 2), lesquelles correspondent respectivement à une épaisseur de matière enlevée au cours d'une des étapes d'enlèvement de matière de la séquence prédéterminée.

En d'autres termes, l'élément optique intermédiaire 10, dans le cas illustratif, est fabriqué de sorte à présenter une géométrie déterminée, avec deux surépaisseurs 8 déterminées, pour ensuite subir deux étapes d'enlèvement de matière, une première étape de finition mise en oeuvre par la machine d'usinage 21, avec un premier outil, et configurée pour enlever l'épaisseur e₁ sur chacune des première et deuxième faces 15 et 16 de l'élément 10, ainsi qu'une deuxième étape de polissage mise en oeuvre également par la machine d'usinage 21, avec un deuxième outil différent du premier outil, et configurée pour enlever l'épaisseur e₂ sur chacune des première et deuxième faces 15 et 16 de l'élément 10.

On notera que les surépaisseurs 8 sont ici comprises dans un intervalle de valeurs environ égal à [50 µm ; 600 µm], que l'épaisseur e₁ (appelée première épaisseur déterminée) d'enlèvement de matière est ici comprise dans un intervalle de valeurs environ égal à [40 µm ; 500 µm] et que l'épaisseur e₂ (appelée deuxième épaisseur déterminée) d'enlèvement de matière est ici comprise dans un intervalle de valeurs environ égal à [10 µm ; 100 µm].

La mise en oeuvre de ces deux étapes de surfaçage que sont la première étape de finition et la deuxième étape de polissage, sur l'élément optique intermédiaire 10, permet d'obtenir la lentille ophtalmique cible 30 illustrée, en section, à droite sur la figure 2.

La lentille ophtalmique cible 30 ainsi fabriquée comporte un corps présentant une face avant 35 et une face arrière 36 opposée à la face avant 35, et un contour ici identique à celui de l'élément optique intermédiaire 10.

En effet, l'élément optique intermédiaire 10 a ici été fabriqué directement avec un contour adapté à une forme de monture prédéterminée dans laquelle la lentille ophtalmique cible 30 est configurée pour être montée.

La lentille ophtalmique cible 30 présente en outre la fonction optique, ici complexe, qui lui est prescrite.

La figure 3 montre, schématiquement, différentes étapes d'un procédé de fabrication de la lentille ophtalmique cible 30, selon une séquence prédéterminée d'au moins une étape de fabrication soustractive, distincte de celle permettant de fabriquer, d'abord l'élément optique intermédiaire 10 puis la lentille ophtalmique cible 30, représentés sur la figure 2.

Sur la gauche de la figure 3 est représenté l'élément optique intermédiaire 10, fabriqué de manière additive, tandis que sur la droite de cette figure est représentée la lentille ophtalmique cible 30 fabriquée de manière soustractive à partir de cet élément optique intermédiaire 10.

Ici, l'élément optique intermédiaire 10 est similaire à celui illustré à gauche sur la figure 2, à l'exception des surépaisseurs 9 qu'il présente au niveau de ses première et deuxième faces 15 et 16, lesquelles surépaisseurs 9 sont déterminées pour un enlèvement de matière au cours d'une seule étape de polissage.

La ligne continue (représentative de la géométrie dite cible de la lentille ophtalmique cible 30 à fabriquer) et la ligne en pointillés (représentative de la géométrie de l'élément optique intermédiaire 10 à fabriquer) sont donc situées à une distance l'une de l'autre qui correspond à la surépaisseur 9 respective, aussi référencées Se. Les surépaisseurs 9 sont chacune égale à une épaisseur déterminée, référencée e₃ (voir la vue de détail sur la figure 3)

En d'autres termes, l'élément optique intermédiaire 10 est fabriqué de sorte à présenter une géométrie déterminée, avec deux surépaisseurs 9 déterminées, pour ensuite subir une unique étape de polissage mise en oeuvre par la machine d'usinage 21, avec un troisième outil, et configurée pour enlever l'épaisseur e₃ sur chacune des première et deuxième faces 15 et 16 de l'élément 10.

On notera que les surépaisseurs 9 et l'épaisseur e₃ (appelée troisième épaisseur déterminée) d'enlèvement de matière sont ici similaires et comprises dans un intervalle de valeurs environ égal à [10µm ; 150µm]. Ces surépaisseurs e₃ ne sont pas nécessairement identiques sur chacune des deux faces de l'élément optique intermédiaire (10).

On notera de plus que cette étape nécessite que la géométrie de l'élément optique intermédiaire permette de conduire par une unique étape de polissage à la géométrie désirée de la lentille ophtalmique cible 30.

La mise en oeuvre de cette unique étape de fabrication de manière soustractive sur l'élément optique intermédiaire 10 permet d'obtenir la lentille ophtalmique cible 30 illustrée, en section, à droite sur la figure 3, laquelle présente la fonction optique, ici complexe, qui lui est prescrite.

On va maintenant décrire plus en détail en référence aux figures 4 à 6 un procédé de fabrication de cette lentille ophtalmique cible 30.

Le procédé de fabrication comporte l'étape 100 de fabriquer de manière additive l'élément optique intermédiaire 10 avec la machine de fabrication additive 1, selon une géométrie déterminée.

Le procédé comporte optionnellement l'étape 200 d'irradier l'élément optique intermédiaire 10 obtenu. Cette étape 200 consiste à terminer la polymérisation de l'élément optique intermédiaire 10.

Le procédé comporte en outre l'étape 300 de fabriquer de manière soustractive selon une séquence prédéterminée d'au moins une étape de surfaçage la lentille ophtalmique 30 à partir de l'élément optique intermédiaire 10, avec la machine d'usinage 21.

Le procédé comporte optionnellement l'étape 400 de traiter la face avant et/ou la face arrière de la lentille ophtalmique ainsi obtenue par fabrication additive puis soustractive, pour y ajouter un ou plusieurs revêtements prédéterminés, par exemple un anti-buée et/ou un anti-reflets et/ou une teinte et/ou un revêtement photochromique et/ou anti-rayures, etc.

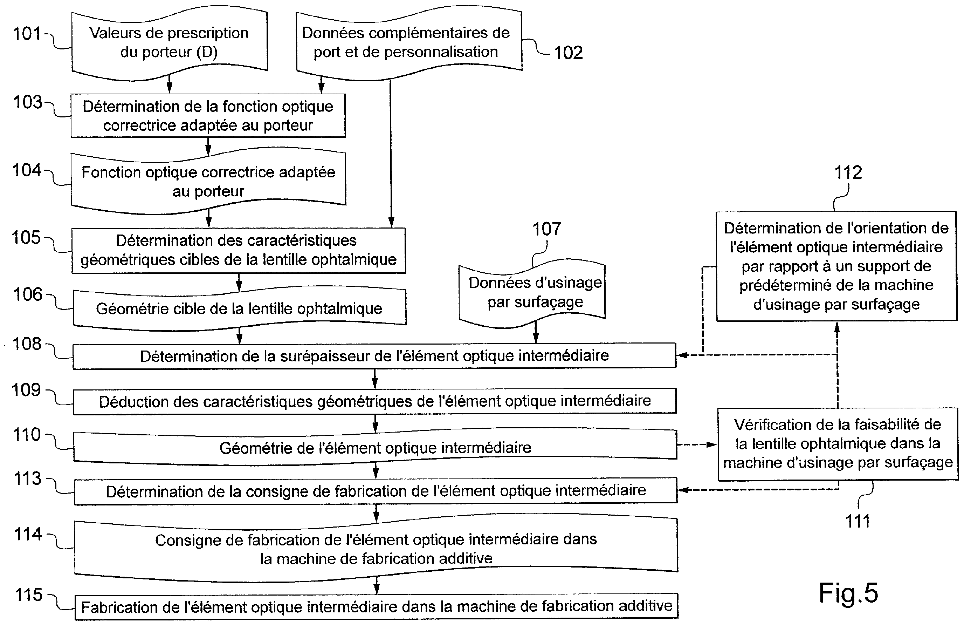

La figure 5 illustre des étapes du procédé de fabrication et plus précisément des étapes pour la détermination d'une consigne de fabrication de l'élément optique intermédiaire 10 en vue de sa fabrication additive grâce à la machine de fabrication additive 1 illustrée sur la figure 1 ; et donc en vue de la fourniture de cet élément optique intermédiaire 10 pour l'une des étapes 200 et 300 du procédé illustré sur la figure 4.

L'unité de contrôle et de commande 2 (appelée première unité) de la machine de fabrication additive 1 est configurée pour recevoir à l'étape 101 un fichier comportant des valeurs de prescription d'un porteur de la lentille ophtalmique 30 à fabriquer.

Ces valeurs de prescription du porteur sont généralement exprimées en dioptrie (D).

La première unité 2 est en outre configurée pour recevoir à l'étape 102 des données complémentaires de port et de personnalisation, liées à la fois au porteur, à une monture prévue pour recevoir la lentille ophtalmique 30 et à la prescription.

On notera que ces données complémentaires de port et de personnalisation correspondent par exemple à des valeurs géométriques qui caractérisent notamment la monture et le comportement visuel du porteur. Il peut s'agir par exemple d'une distance entre l'oeil et la lentille et/ou d'une position du centre de rotation de l'oeil, et/ou d'un coefficient oeil-tête, et/ou d'un angle pantoscopique et/ou d'un galbe de la monture et/ou du contour de la monture.

La première unité 2 est configurée pour déterminer à l'étape 103 une fonction optique correctrice adaptée au porteur à partir des valeurs de prescription porteur et des données complémentaires de port et de personnalisation reçues aux étapes respectives 101 et 102, et en fonction du positionnement géométrique de la lentille 30 par rapport à l'oeil du porteur.

Cette fonction optique correctrice adaptée au porteur correspond à la fonction optique cible de la lentille ophtalmique 30 à fabriquer.

On notera que la détermination de la fonction optique correctrice adaptée au porteur peut être effectuée par exemple à l'aide d'un logiciel de tracé de rayons, lequel permet de déterminer la puissance porteur et l'astigmatisme résultant de la lentille dans les conditions de port de cette dernière. Une optimisation peut être effectuée en suivant des méthodes d'optimisation optique bien connues.

On notera également que l'étape 102 est optionnelle et donc que la fonction optique correctrice adaptée au porteur peut être déterminée par la première unité 2 à l'étape 103, seulement à partir des valeurs de prescription reçues à l'étape 101, et en fonction du positionnement géométrique de la lentille ophtalmique 30 par rapport à l'oeil du porteur.

La première unité 2 est configurée pour générer à l'étape 104 un fichier appelé « fonction optique » qui caractérise cette fonction optique correctrice adaptée au porteur déterminée à l'étape 103.

On notera que ce fichier « fonction optique » est un fichier dit de surface qui est pourvu par exemple de caractéristiques géométriques sous la forme de coordonnées x, y, z, θ, en un nombre fini de points, ou d'une fonction de surface z = f(x,y) définissant chaque face, de caractéristiques liées à un indice de réfraction, de diverses distances et angles tels que ceux mentionnés plus haut.

On notera que la fonction optique correctrice adaptée au porteur peut, à la place d'être déterminée par la première unité 2 à l'étape 103, être directement reçue par cette première unité 2 sous forme d'un tel fichier.

La première unité 2 est configurée pour déterminer, à l'étape 105, des caractéristiques géométriques cibles de la lentille ophtalmique 30 à fabriquer, à partir du fichier « fonction optique » généré à l'étape 104 et à partir des données complémentaires de port et de personnalisation reçues à l'étape 102, et en particulier celles liées à la monture prévue pour recevoir la lentille ophtalmique 30.

La première unité 2 est configurée pour générer à l'étape 106 un fichier appelé « géométrie cible » qui caractérise les caractéristiques géométriques de la lentille ophtalmique 30 à fabriquer, déterminées à l'étape 105.

On notera que ce fichier « géométrie cible » est également un fichier dit de surface qui est pourvu par exemple de caractéristiques géométriques sous la forme de coordonnées x, y, z, θ, en un nombre fini de points, ou d'une fonction de surface z = f(x,y) définissant chaque face, de caractéristiques liées à un indice de réfraction, de diverses distances et angles tels que ceux mentionnés plus haut. Le fichier « géométrie cible » est représentatif en fait à la fois de la fonction optique et de la géométrie à apporter à la lentille ophtalmique 30.

La première unité 2 est en outre configurée pour recevoir à l'étape 107 un fichier comportant des données d'usinage par surfaçage avec la machine de fabrication soustractive 21. Ces données sont relatives d'une part au choix de la séquence prédéterminée d'au moins une étape de fabrication soustractive, et d'autre part à des paramètres intrinsèques à la machine et à l'outil de coupe. Il peut aussi s'agir par exemple, pour la machine, des paramètres de doucissage et/ou de polissage mentionnés ci-dessus, tels que la vitesse de rotation, la vitesse de balayage, le nombre de balayages, l'amplitude de balayage de l'outil de balayage, et, pour l'outil, le diamètre de pupille.

On notera que la première unité 2 est en outre configurée pour recevoir (étape non représentée) un fichier comportant des caractéristiques liées à l'indice de réfraction du matériau 18 utilisé pour la fabrication additive de l'élément optique intermédiaire 10.

On notera également que la première unité 2 est configurée pour déterminer, optionnellement, un retrait dimensionnel ainsi qu'une variation d'indice de l'élément optique intermédiaire 10. Il s'agit ici d'évolutions possibles ultérieures, d'une part, de l'indice de réfraction du matériau 18 dans lequel est fabriqué l'élément optique intermédiaire 10 et, d'autre part, de la géométrie (retrait dimensionnel) de l'élément optique intermédiaire 10.

On notera également que la première unité 2 est configurée pour déterminer, optionnellement, une modification courbure globale pouvant apparaitre, par exemple lors de l'étape de polissage, par déformation plastique ou par compression de la lentille en cours de polissage sous l'influence de l'outil de polissage.

La première unité 2 est configurée pour déterminer à l'étape 108 la ou les surépaisseurs 8, 9 (Se) à apporter à l'élément optique intermédiaire 10 à partir des caractéristiques et valeurs générées ou reçues dans les fichiers au moins aux étapes 106 et 107, respectivement relatifs à la géométrie cible de la lentille ophtalmique 30 à fabriquer, aux données d'usinage par surfaçage reçues en fonction du choix effectué de la séquence d'au moins une étape parmi une étape d'usinage et de polissage, et à partir de la valeur de l'indice du matériau de fabrication de l'élément optique intermédiaire 10 et des caractéristiques relatives à un éventuel retrait dimensionnel ainsi qu'à une éventuelle variation d'indice de l'élément optique intermédiaire 10.

La première unité 2 est configurée pour déduire à l'étape 109 des caractéristiques géométriques de l'élément optique intermédiaire 10 à fabriquer à partir de la ou des valeurs de surépaisseurs 8, 9 déterminées à l'étape 109, prises en combinaison avec le fichier « géométrie cible » généré à l'étape 106.

On notera que ces caractéristiques géométriques de l'élément optique intermédiaire 10 sont ainsi déduites de manière à ce que la ou les surépaisseurs soient représentatives de l'écart de géométrie entre la géométrie cible de la lentille ophtalmique 30 et la géométrie de l'élément optique intermédiaire 10.

La première unité 2 est en outre configurée pour générer un fichier à l'étape 110 qui caractérise les caractéristiques géométriques de l'élément optique intermédiaire 10 déduites à l'étape 109 et représentatives de la géométrie souhaitée, laquelle prend en considération la séquence prédéterminée d'au moins une étape de fabrication soustractive.

On notera que ce fichier est également un fichier dit de surface qui est pourvu par exemple de caractéristiques géométriques sous la forme de coordonnées x, y, z, θ, ou d'une fonction de surface z = f(x,y) définissant chaque face, en un nombre fini de points, de caractéristiques liées à un indice de réfraction, de diverses distances et angles tels que ceux mentionnés plus haut.

Autrement dit, ce fichier dit de surface reflète une description de la géométrie souhaitée de cet élément optique intermédiaire 10 à fabriquer, avec en pratique, un agencement déterminé des éléments de volume prédéterminés du ou des matériaux.

On notera que la géométrie de l'élément optique intermédiaire 10 est déterminée de sorte à être directement adaptée au contour de la monture dans laquelle la lentille 30 est configurée pour être montée. En variante, le contour de l'élément 10 défini dans ce fichier ne correspond pas au contour de la monture et une opération de détourage est nécessaire.

La première unité 2 est en outre configurée pour déterminer à l'étape 113 la consigne de fabrication de l'élément optique intermédiaire 10, à partir des caractéristiques que comporte le fichier généré à l'étape 110 relatif à la géométrie de l'élément optique intermédiaire 10.

La première unité 2 est configurée pour générer à l'étape 114 le fichier de fabrication correspondant à la consigne de fabrication de l'élément optique intermédiaire 10 sur le support de fabrication 12 de la machine de fabrication additive 1 (dans un repère connu de cette machine).

Ce fichier « consigne » est similaire au fichier de géométrie de l'élément optique intermédiaire 10 généré à l'étape 110, si ce n'est qu'il reflète une description transcrite de la géométrie souhaitée de cet élément optique intermédiaire 10 à fabriquer, avec en pratique, un agencement des éléments de volume prédéterminés du ou des matériaux ; incluant une orientation angulaire déterminée de l'élément optique intermédiaire 10 sur le support de fabrication 12 pour sa fabrication et des modifications liées à un éventuel retrait dimensionnel ainsi qu'à une éventuelle variation d'indice de l'élément optique intermédiaire 10.

On observera qu'optionnellement, la première unité 2 est configurée pour vérifier à l'étape 111 la faisabilité de la lentille ophtalmique 30 à fabriquer dans la machine d'usinage par surfaçage 21, à partir des caractéristiques que comporte le fichier généré à l'étape 110 relatif à la géométrie de l'élément optique intermédiaire 10 et à partir de données relatives à la machine d'usinage par surfaçage 21 reçues à l'étape 107 et en particulier relatives au diamètre de la pupille de l'outil de doucissage et/ou polissage de cette machine 21.

La figure 7 illustre un détail de l'élément optique intermédiaire 10 représenté sur la figure 2, au niveau de sa première face (non représentée) et un outil de doucissage et/ou de polissage 40 dont la pupille 41 présente une face d'attaque de diamètre prédéterminé, par exemple 1mm ou 2mm.

Sur ce détail sont représentées partiellement cinq couches superposées de matériau 18, dont on voit les extrémités au niveau de la première face. Entre deux couches immédiatement superposées dont l'épaisseur (ou la hauteur) h (h₁, h₂) est prédéterminée, est formée une marche de longueur À (λ₁, λ₂). Ici, la hauteur et la longueur de deux marches sont représentées, respectivement h₁ et λ₁ et h₂ et λ₂.

Dans un premier cas où le diamètre de pupille 41 est supérieur ou égal à la longueur À de marche et que la hauteur h de marche se trouve dans un intervalle de valeurs prédéterminé, par exemple environ égal à [1 µm ; 50 µm], alors la pupille 41 de l'outil 40 est capable d'enlever de la matière (finir et/ou polir) sur la surface de l'élément optique intermédiaire 10 afin de supprimer ces marches et de fournir une rugosité de qualité optique, tout en fournissant la géométrie et la fonction optique souhaitées à la lentille ophtalmique 30.

Dans un second cas où le diamètre de pupille 41 est inférieur à la longueur À de marche et/ou que la hauteur h de marche ne se trouve dans un intervalle de valeurs prédéterminé, par exemple environ égal à [1 µm ; 50 µm], alors la pupille 41 de l'outil 40 peut par exemple laisser certaines des traces des marches et/ou ne pas fournir la géométrie et la fonction optique souhaitées à la lentille ophtalmique 30.

La première unité 2 est configurée pour effectuer ces vérifications et décider, dans le premier cas, de poursuivre le procédé avec l'étape 113 de détermination de la consigne de fabrication de l'élément optique intermédiaire 10 et, dans le deuxième cas, d'effectuer une correction de la géométrie de l'élément optique intermédiaire 10.

La première unité 2 est ainsi configurée, soit pour effectuer directement une correction de la ou des surépaisseurs lors de l'étape 108, soit pour déterminer à l'étape 112 une correction de l'orientation angulaire de l'élément optique intermédiaire 10 sur et par rapport au support de fabrication 12 de la machine de fabrication additive 1, avec l'étape 112 qui est succédée par une correction, ou non, de la ou des surépaisseurs à l'étape 108.

On notera que la correction de l'orientation angulaire de l'élément optique intermédiaire 10 pour sa fabrication permet notamment d'influer sur la longueur λ des marches tandis que la correction de la ou des surépaisseurs est représentative de l'ajout volontaire d'une pluralité d'éléments de volume prédéterminés de matériau 18 notamment sur les marches dont la longueur λ est supérieure au diamètre de la pupille 41 pour réduire leur longueur, voire de l'ajout volontaire d'une pluralité d'éléments de volume prédéterminés de matériau 18 notamment pour boucher au moins partiellement certaines marches et ainsi réduire leur hauteur.

La première unité 2 peut également être configurée pour lancer à l'étape 115 la fabrication additive de l'élément optique intermédiaire 10 sur le support de fabrication 12 dans la machine de fabrication additive 1, sur la base des caractéristiques du fichier de fabrication généré à l'étape 114.

Cette première unité de contrôle et de commande 2 est donc configurée pour exécuter un logiciel pour la mise en oeuvre de différentes étapes du procédé de fabrication de la lentille ophtalmique, en utilisant les paramètres reçus, afin de déterminer la consigne de fabrication de l'élément optique intermédiaire 10, voire de le réaliser.

La figure 6 illustre des étapes du procédé de fabrication et plus précisément des étapes pour la détermination d'une consigne de fabrication de la lentille ophtalmique 30 en vue de sa fabrication soustractive grâce à la machine de fabrication soustractive 21 illustrée sur la figure 1, à partir de l'élément optique intermédiaire 10 obtenu par fabrication additive.

L'unité de contrôle et de commande 22 (appelée deuxième unité) de la machine de fabrication soustractive 21 est configurée pour recevoir à l'étape 301 le fichier « géométrie cible » généré à l'étape 106 et représentatif de la géométrie de la lentille ophtalmique.

La deuxième unité 22 est en outre configurée pour recevoir à l'étape 302 le fichier caractérisant la géométrie de l'élément optique intermédiaire 10 fabriqué de manière additive et généré à l'étape 110.

La deuxième unité 22 est en outre configurée pour déterminer à l'étape 303 la consigne de fabrication de la lentille ophtalmique 30, à partir des caractéristiques géométriques que comportent les fichiers générés respectivement aux étapes 106 et 110 et reçus aux étapes 301 et 302.

La deuxième unité 22 est configurée pour générer à l'étape 304 le fichier de fabrication correspondant à la consigne de fabrication de la lentille ophtalmique 30 à partir de l'élément optique intermédiaire 10, sur le support de fabrication 32 de la machine d'usinage 21 (dans un repère connu de cette machine).

Ce fichier « consigne » est représentatif de l'usinage par tournage (ou surfaçage) qui est à réaliser sur l'élément optique intermédiaire 10 obtenu par fabrication additive pour obtenir la lentille ophtalmique 30 dans sa géométrie déterminée préalablement.

La deuxième unité 22 peut également être configurée pour lancer à l'étape 305 le doucissage d'au moins une face 15, 16 de l'élément optique intermédiaire 10 obtenu sur le support de fabrication 32 dans la machine d'usinage, avec un premier outil prédéterminé, sur la base des caractéristiques du fichier de fabrication généré à l'étape 304, afin d'enlever la première épaisseur de matière déterminée e1.

La deuxième unité 22 peut en outre être configurée pour lancer à l'étape 306 le polissage d'au moins une face 15, 16 de l'élément optique intermédiaire 10 douci à l'étape 305, sur le support de fabrication 32 dans la machine d'usinage, avec un deuxième outil prédéterminé, sur la base des caractéristiques du fichier de fabrication généré à l'étape 304, afin d'enlever la deuxième épaisseur de matière déterminée e₂.

Les étapes 305 et 306 correspondent donc à une première séquence prédéterminée de deux étapes de surfaçage.

La deuxième unité 22 peut en variante être configurée pour lancer à l'étape 307 (remplaçant les étapes 305 et 306) un unique polissage d'au moins une face 15, 16 de l'élément optique intermédiaire 10 obtenu sur le support de fabrication 32 dans la machine d'usinage, avec un troisième outil prédéterminé, sur la base des caractéristiques du fichier de fabrication généré à l'étape 304, afin d'enlever la troisième épaisseur de matière déterminée e₃.

L'étape 307 correspond donc à une deuxième séquence prédéterminée d'une seule étape de polissage.

Cette deuxième unité de contrôle et de commande 22 est donc configurée pour exécuter un logiciel pour la mise en oeuvre de différentes étapes du procédé de fabrication de la lentille ophtalmique 30, en utilisant les paramètres reçus, afin de déterminer la consigne de fabrication de la lentille ophtalmique 30, voire de la réaliser à partir de l'élément optique intermédiaire 10 selon une séquence prédéterminée.

Dans une variante non illustrée, une interface de communication client-serveur comporte un côté dit fournisseur et un autre côté dit client, ces deux côtés communicant via un réseau, par exemple du type internet.

Le côté fournisseur comporte un serveur relié à des unités de contrôle et de commande du même type que celles de la figure 1, mais cette fois-ci non intégrées à un système de fabrication et en particulier aux machines de fabrication additive et d'usinage par surfaçage, ce serveur étant configuré pour communiquer avec l'interface internet.

Le côté client est configuré pour communiquer avec l'interface internet, et est relié à une ou plusieurs unités de contrôle et de commande du même type que celles du côté fournisseur.

En outre, la ou les unités côté client sont reliées à une machine de fabrication additive du même type que celle de la figure 1 pour fabriquer l'élément optique intermédiaire et à au moins une machine d'usinage par surfaçage pour fabriquer la lentille ophtalmique à partir de l'élément optique intermédiaire.

La ou les unités côté client sont configurées pour recevoir les fichiers de données correspondant aux étapes 101, 102 et 107, et les données caractéristiques du matériau utilisé.

La ou les unités côté client envoient par l'intermédiaire de l'interface internet et du serveur ces données à la ou aux unités côté fournisseur pour la détermination de la consigne de fabrication de l'élément optique intermédiaire et pour la détermination de la consigne de fabrication de la lentille ophtalmique.

La ou les unités côté fournisseur exécutent via son système de traitement de données le programme d'ordinateur qu'il contient pour mettre en oeuvre le procédé de fabrication et ainsi déduire d'une part la consigne de fabrication pour fabriquer l'élément optique intermédiaire et d'autre part la consigne de fabrication pour fabriquer la lentille ophtalmique.

La ou les unités côté fournisseur envoient, par l'intermédiaire du serveur et du réseau, un fichier représentatif de la consigne de fabrication de l'élément optique intermédiaire et un fichier représentatif de la consigne de fabrication de la lentille ophtalmique déterminés, à la ou aux unités de contrôle et de commande côté client.

La ou les unités côté client sont configurées pour exécuter un logiciel pour la mise en oeuvre du procédé de fabrication de la lentille ophtalmique, en utilisant les paramètres reçus, afin de réaliser l'élément optique intermédiaire puis la lentille ophtalmique.

Dans des variantes non illustrées :
- le système de fabrication ne comporte qu'une seule et même machine dans laquelle sont intégrés des dispositifs de fabrication additive et d'usinage par surfaçage ;
- la pluralité d'éléments de volume prédéterminés juxtaposés et superposés forme des couches superposées qui présentent chacune une épaisseur constante ou variable sur la longueur et/ou qui présentent toutes la même épaisseur ou pas ;
- le matériau est par exemple un matériau transparent déposé par stéréolithographie, ce matériau étant par exemple un polymère époxy commercialisé par la société 3D SYSTEMS sous la marque Accura® ClearVue;
- le matériau est un photopolymère comportant une ou plusieurs familles de molécules ayant une ou plusieurs fonctions acryliques, methacryliques, acrylates, methacrylates, une famille de molécules ayant une ou plusieurs fonctions époxy, thioépoxy, thiol-ène, une famille de molécules ayant une ou plusieurs fonctions vinyle éther, vinyle caprolactame, vinylpyrolidone, une famille de matériau de type hyperbranchée, de type hybride organique/inorganique, ou une combinaison de ces fonctions ; les fonctions chimiques mentionnées pouvant être portées par des monomères ou des oligomères ou une combinaison de monomères et oligomères ;
- le matériau peut comporter au moins un photo-initiateur ;
- le matériau peut comporter des colloïdes, en particulier des particules colloïdales ayant des dimensions par exemple inférieures aux longueurs d'onde visibles, telles que par exemple des particules colloïdales d'oxyde de Silice SiO2 ou des particules colloïdales d'oxyde de Zircone ZrO2 ;
- le matériau peut comporter, dans au moins certains des éléments de volume prédéterminés, un pigment ou un colorant, par exemple un colorant qui appartient aux familles des azo, ou rhodamines, ou cyanines, ou polymethines, ou merocyanines, ou fluorescéines, ou pyrylium, ou phtalocyanines, ou pérylènes, ou benzanthrones, ou anthrapyrimidines, ou anthrapyridones, ou encore un colorant pourvu de complexes métalliques tels que des chélates ou des cryptates de terres rares ;
- l'élément optique intermédiaire est réalisé dans d'autres matériaux tels que le polycarbonate, le polymethy(Imeth)acylate, le polyamide ou des polymères thiouréthanes ou épisulfides, ces matériaux étant bien connu de l'homme de l'art dans le domaine des lentilles ophtalmiques ;
- le procédé comporte en outre une ou plusieurs autres étapes de fabrication, par exemple une étape de détourage et/ou une étape de marquage pour former des marques dites temporaires ;
- le support de fabrication additive présente une surface de fabrication sur laquelle l'élément optique intermédiaire est fabriqué de manière additive, laquelle surface de fabrication est au moins partiellement plane et/ou au moins partiellement sphérique ;
- le procédé de fabrication comporte une étape supplémentaire d'irradiation thermique, et/ou une étape supplémentaire d'irradiation actinique, tels que, par exemple, dans les longueurs d'ondes du spectre des ultra-violet, voire aucune étape d'irradiation ;
- le procédé de fabrication comporte une étape où la prise en compte de la variation d'indice du matériau de l'élément optique intermédiaire peut se faire sous la forme d'une boucle d'optimisation itérative selon des procédures d'optimisation connues ;
- le matériau de l'élément optique intermédiaire comporte optionnellement un ou plusieurs colorants, et/ou des nanoparticules configurées pour modifier sa transmission optique et/ou son aspect, et/ou des nanoparticules ou additifs configurés pour modifier ses propriétés mécaniques ;
- la machine de fabrication additive n'est pas une machine d'impression tridimensionnelle mais plutôt une machine de stéréolithographie, (SLA pour « Stereolithography *Apparatus* » en anglais) ou une machine d'extrusion par fil thermoplastique, aussi appelée machine de dépôt à fil tendu (FDM pour « *Fused Deposition Modeling* » en anglais) ;
- au moins une unité de contrôle et de commande comporte un microcontrôleur en place du microprocesseur ;
- l'interface de communication client-serveur comporte des dispositifs configurés pour transférer la consigne de fabrication de l'élément optique intermédiaire et la consigne de fabrication de la lentille ophtalmique déterminées par un programme d'ordinateur, lequel comporte des instructions configurées pour mettre en oeuvre chacune des étapes du procédé de fabrication décrit ci-dessus lorsque ce programme d'ordinateur est exécuté dans au moins une unité de contrôle et de commande qui comporte des éléments systémiques configurés pour exécuter ledit programme d'ordinateur ;
- l'interface de communication permet la communication via d'autres moyens que le réseau internet, par exemple via un réseau intranet ou un réseau privé sécurisé ; et/ou
- l'interface de communication permet de transférer l'ensemble du programme d'ordinateur vers un système de traitement de données distant pour la mise en oeuvre du procédé de fabrication dans un autre système de fabrication pourvu d'une machine de fabrication additive et d'au moins une machine de surfaçage et optionnellement dans une ou plusieurs autres machines de traitement.

On rappelle plus généralement que l'invention ne se limite pas aux exemples décrits et représentés.

## Revendications

1. Procédé de fabrication d'une lentille ophtalmique présentant au moins une fonction optique, **caractérisé en ce qu'**il comporte les étapes suivantes :
- fabriquer de manière additive (100), en mettant en oeuvre un procédé d'impression tridimensionnelle, ou de stéréolithographie, ou de stéréolithographie par projection de masque, ou de frittage ou de fusion sélective par laser, ou d'extrusion par fil thermoplastique, un élément optique intermédiaire (10) par le dépôt d'une pluralité d'éléments de volume prédéterminés d'au moins un matériau ayant un indice de réfraction prédéterminé, ledit élément optique intermédiaire comprenant une lentille ophtalmique cible (30) adjoint d'une surépaisseur (Se) constituée d'une partie de ladite pluralité d'éléments de volume ; et
- postérieurement à ladite étape de fabrication additive, fabriquer de manière soustractive (300) par usinage ladite lentille ophtalmique cible (30) à partir dudit élément optique intermédiaire (10), l'usinage étant réalisée selon une séquence prédéterminée, d'au moins une étape, ladite séquence prédéterminée permettant de soustraire ladite surépaisseur ;
avec ladite étape de fabriquer de manière additive (100) qui comprend une étape de déterminer une consigne de fabrication (113) dudit élément optique intermédiaire (10) dans lequel ladite surépaisseur (Se) est déterminée en fonction de ladite séquence prédéterminée définie dans l'étape de fabriquer de manière soustractive (300).

2. Procédé selon la revendication 1, **caractérisé en ce que** la surépaisseur (Se), générée durant l'étape de fabriquer de manière additive (100) conduisant à l'élément optique intermédiaire (10) puis soustraite pendant l'étape de fabriquer de manière soustractive (300) conduisant à la lentille ophtalmique cible (30), est comprise entre 1 µm et 1000 µm inclus, préférentiellement comprise entre 30 µm et 1000 µm inclus.

3. Procédé selon la revendication 1 ou 2, **caractérisé en ce que** ladite séquence prédéterminée comprend au moins une étape choisie parmi une étape d'ébauche, une étape de finition, et une étape de polissage, seule ou en combinaison.

4. Procédé selon la revendication 3, **caractérisé en ce que** ladite séquence prédéterminée est choisie parmi :
- une étape d'ébauche réalisée sur l'élément optique intermédiaire (10) conduisant à un élément optique intermédiaire d'état 2, suivie d'une étape de finition réalisée sur ledit élément optique intermédiaire d'état 2 conduisant à un élément optique intermédiaire d'état 3, suivi d'une étape de polissage réalisée sur ledit élément optique intermédiaire d'état 3 conduisant à la lentille ophtalmique cible (30) ; ou
- une étape de finition réalisée sur l'élément optique intermédiaire (10) conduisant à un élément optique intermédiaire d'état 4, suivie d'une étape de polissage réalisée sur ledit élément optique intermédiaire d'état 4 conduisant à la lentille ophtalmique cible (30) ; ou
- une étape de polissage réalisée sur l'élément optique intermédiaire (10) conduisant à la lentille ophtalmique cible (30).

5. Procédé selon la revendication 3 ou 4, **caractérisé en ce que** ladite séquence prédéterminée est identique ou différente sur l'ensemble de l'élément optique intermédiaire (10).

6. Procédé selon l'une des revendications 1 à 5, **caractérisé en ce que** l'étape de fabriquer de manière additive (100) un élément optique intermédiaire (10) comprenant la lentille ophtalmique cible (30) adjoint d'une surépaisseur (Se) est réalisée par le dépôt d'une pluralité d'éléments de volume prédéterminés d'un matériau identique constitutif de la lentille ophtalmique cible et de la surépaisseur.

7. Procédé selon l'une des revendications 1 à 5, **caractérisé en ce que** l'étape de fabriquer de manière additive (100) un élément optique intermédiaire (10) comprenant la lentille ophtalmique cible (30) adjoint d'une surépaisseur (Se) est réalisée par le dépôt d'une pluralité d'éléments de volume prédéterminés d'au moins deux matériaux différents, les matériaux différants notamment soit de par leur indice de réfraction, soit de par leur propriété intrinsèque d'abrasabilité.

8. Procédé selon l'une quelconque des revendications 1 à 7, **caractérisé en ce que** ladite étape de déterminer une consigne de fabrication (113) dudit élément optique intermédiaire (10) comporte les étapes suivantes :
- déterminer des caractéristiques géométriques cibles (105) de ladite lentille ophtalmique à partir de caractéristiques de ladite fonction optique à apporter à ladite lentille ophtalmique ;
- déterminer ladite surépaisseur (108), à partir desdites caractéristiques géométriques cibles déterminées et de caractéristiques liées à ladite séquence prédéterminée de fabrication soustractive ; et
- déduire des caractéristiques géométriques (109) dudit élément optique intermédiaire (10) à partir desdites caractéristiques géométriques cibles déterminées et de ladite surépaisseur déterminée (Se).

9. Procédé selon la revendication 8, **caractérisé en ce que** l'étape de déterminer ladite surépaisseur (108) comprend en outre la prise en compte de données physiques matériaux liées à ladite séquence prédéterminée de fabrication soustractive.

10. Procédé selon la revendication 8, **caractérisé en ce que** ladite fonction optique à apporter à ladite lentille ophtalmique est caractéristique de valeurs de prescription liées à un porteur de ladite lentille ophtalmique et de données complémentaires de port d'une monture prédéterminée et/ou de personnalisation, et/ou de forme de la monture.

11. Procédé selon l'une des revendications précédentes, dans lequel l'élément optique intermédiaire (10) a un contour sensiblement égal à un contour configuré pour être introduit dans une monture prédéterminée.

12. Système de fabrication d'une lentille ophtalmique, comportant une machine de fabrication additive (1), au moins une machine de fabrication soustractive (21), pour fabriquer une lentille ophtalmique et au moins une unité de contrôle et de commande (2, 22) pourvue d'éléments systémiques (3, 4, 5, 23, 24, 25) configurés pour exécuter un programme d'ordinateur comportant des instructions configurées pour mettre en oeuvre chacune des étapes du procédé selon l'une quelconque des revendications 1 à 11.

13. Système de fabrication selon la revendication 12, comportant en outre une machine de vernissage configurée pour déposer un vernis sur l'élément issu de la machine de fabrication soustractive.

14. Système de fabrication selon la revendication 12, dans lequel la machine de fabrication additive comporte un support de fabrication (12), lequel support de fabrication est amovible et configuré pour servir de support de fabrication pour la machine de fabrication soustractive (32).

## Patentansprüche

1. Verfahren für die Herstellung einer Augenlinse, die wenigstens eine optische Funktion besitzt, **dadurch gekennzeichnet, dass** es die folgenden Schritte umfasst:
- Herstellen (100) auf additive Weise unter Ausführung eines dreidimensionalen Druckverfahrens oder eines Stereolithographieverfahrens oder eines Stereolithographieverfahrens durch Maskenprojektion oder eines selektives Sinterns oder Schmelzens durch Laser oder eines Extrudierens elastischer Fasern eines optischen Zwischenelements (10) durch Ablagern mehrerer vorgegebener Volumenelemente aus wenigstens einem Material, das einen vorgegebenen Brechungsindex besitzt, wobei das optische Zwischenelement eine Zielaugenlinse (30) enthält, die eine Überdicke (Se) aufweist, die durch einen Teil der mehreren Volumenelemente gebildet ist; und
- nach dem Schritt des additiven Herstellens Herstellen (300) auf subtraktive Weise durch Bearbeitung der Zielaugenlinse (30) ausgehend von dem optischen Zwischenelement (10), wobei die Bearbeitung mit einer vorgegebenen Folge aus wenigstens einem Schritt ausgeführt wird, wobei die vorgegebene Folge die Wegnahme der Überdicke ermöglicht;
wobei der Schritt des Herstellens (100) auf additive Weise einen Schritt des Bestimmens (113) eines Herstellungssollwerts des optischen Zwischenelements (10) umfasst, in dem die Überdicke (Se) als Funktion der vorgegebenen Folge, die im Schritt des Herstellens (300) auf subtraktive Weise definiert ist, bestimmt wird.

2. Verfahren nach Anspruch 1, **dadurch gekennzeichnet, dass** die Überdicke (Se), die während des Schrittes des Herstellens (100) auf additive Weise erzeugt wird, was zu dem optischen Zwischenelement (10) führt, und die dann während des Schrittes des Herstellens (300) auf subtraktive Weise entfernt wird, was zu der Zielaugenlinse (30) führt, im Bereich von 1 µm bis 1000 µm einschließlich der Grenzen, vorzugsweise im Bereich von 30 µm bis 1000 µm einschließlich der Grenzen, liegt.

3. Verfahren nach Anspruch 1 oder 2, **dadurch gekennzeichnet, dass** die vorgegebene Folge wenigstens einen Schritt umfasst, der aus einem Entwurfsschritt, einem Endbearbeitungsschritt und einem Polierschritt einzeln oder in Kombination gewählt ist, umfasst.

4. Verfahren nach Anspruch 3, **dadurch gekennzeichnet, dass** die vorgegebene Folge gewählt wird aus:
- einem Entwurfsschritt, der an dem optischen Zwischenelement (10) ausgeführt wird, was zu einem optischen Zwischenelement im Zustand 2 führt, gefolgt von einem Endbearbeitungsschritt, der an dem optischen Zwischenelement im Zustand 2 ausgeführt wird, was zu einem optischen Zwischenelement im Zustand 3 führt, gefolgt von einem Polierschritt, der an dem optischen Zwischenelement im Zustand 3 ausgeführt wird, was zu der Zielaugenlinse (30) führt; oder
- einen Endbearbeitungsschritt, der an dem optischen Zwischenelement (10) ausgeführt wird, was zu einem optischen Zwischenelement im Zustand 4 führt, gefolgt von einem Polierschritt, der an dem optischen Zwischenelement im Zustand 4 ausgeführt wird, was zu der Zielaugenlinse (30) führt; oder
- einen Polierschritt, der an dem optischen Zwischenelement (10) ausgeführt wird, was zu der Zielaugenlinse (30) führt.

5. Verfahren nach Anspruch 3 oder 4, **dadurch gekennzeichnet, dass** die vorgegebene Folge an dem gesamten optischen Zwischenelement (10) gleich oder unterschiedlich ist.

6. Verfahren nach einem der Ansprüche 1 bis 5, **dadurch gekennzeichnet, dass** der Schritt des Herstellens (100) auf additive Weise eines optischen Zwischenelements (10), das die Zielaugenlinse (30) enthält, die mit einer Überdicke (Se) versehen ist, durch Ablagerung mehrerer vorgegebener Volumenelemente aus dem gleichen Material, das die Zielaugenlinse und die Überdicke bildet, ausgeführt wird.

7. Verfahren nach einem der Ansprüche 1 bis 5, **dadurch gekennzeichnet, dass** der Schritt des Herstellens (100) auf additive Weise eines optischen Zwischenelements (10), das die Zielaugenlinse (30), die mit einer Überdicke (Se) versehen ist, umfasst, durch Ablagern mehrerer vorgegebener Volumenelemente aus wenigstens zwei unterschiedlichen Materialien ausgeführt wird, wobei die Materialien insbesondere entweder aufgrund ihres Brechungsindex oder ihrer intrinsischen Abschleifeigenschaft verschieden sind.

8. Verfahren nach einem der Ansprüche 1 bis 7, **dadurch gekennzeichnet, dass** der Schritt des Bestimmens eines Herstellungssollwerts (113) des optischen Zwischenelements (10) die folgenden Schritte umfasst:
- Bestimmen geometrischer Zieleigenschaften (105) der Augenlinse auf der Basis von Eigenschaften der optischen Funktion, die der Augenlinse verliehen werden soll;
- Bestimmen der Überdicke (108) auf der Basis der bestimmten geometrischen Zieleigenschaften und der Eigenschaften, die mit der vorgegebenen Folge der subtraktiven Herstellung in Beziehung stehen; und
- Ableiten geometrischer Eigenschaften (109) des optischen Zwischenelements (10) auf der Basis der bestimmten geometrischen Zieleigenschaften und der bestimmten Überdicke (Se).

9. Verfahren nach Anspruch 8, **dadurch gekennzeichnet, dass** der Schritt des Bestimmens der Überdicke (108) außerdem die Berücksichtigung physikalischer Materialdaten, die mit der vorgegebenen Folge der subtraktiven Herstellung in Beziehung stehen, umfasst.

10. Verfahren nach Anspruch 8, **dadurch gekennzeichnet, dass** die optische Funktion, die der Augenlinse verliehen werden soll, für Verschreibungswerte, die mit einem Träger der Augenlinse in Beziehung stehen, charakteristisch ist und für komplementäre Daten des Tragens einer vorgegebenen Fassung und/oder der Personalisierung und/oder der Form der Fassung charakteristisch ist.

11. Verfahren nach einem der vorhergehenden Ansprüche, wobei das optische Zwischenelement (10) einen Umriss besitzt, der im Wesentlichen gleich einem Umriss ist, der konfiguriert ist, um in eine vorgegebene Fassung eingesetzt zu werden.

12. System zum Herstellen einer Augenlinse, das eine Maschine (1) für additive Herstellung, wenigstens eine Maschine (21) für subtraktive Herstellung, um eine Augenlinse herzustellen, und wenigstens eine Kontroll- und Steuereinheit (2, 22) umfasst, die mit Systemelementen (3, 4, 5, 23, 24, 25) versehen ist, die konfiguriert sind, ein Computerprogramm auszuführen, das Befehle enthält, die konfiguriert sind, um jeden der Schritte des Verfahrens nach einem der Ansprüche 1 bis 11 auszuführen.

13. Herstellungssystem nach Anspruch 12, das außerdem eine Lackiermaschine umfasst, die konfiguriert ist, auf das Element, das von der Maschine für subtraktive Herstellung ausgegeben wird, einen Lack aufzutragen.

14. Herstellungssystem nach Anspruch 12, wobei die Maschine für additive Herstellung einen Herstellungsträger (12) umfasst, wobei der Herstellungsträger abnehmbar ist und konfiguriert ist, als Herstellungsträger für die Maschine (32) für subtraktive Herstellung zu dienen.

## Claims

1. Process for manufacturing an ophthalmic lens having at least one optical function, **characterized in that** it includes the following steps:
- additively manufacturing (100), by implementing a three-dimensional printing, or stereolithography, or mask projection stereolithography process or a selective laser melting or sintering process, or a thermoplastic filament extrusion process, an intermediate optical element (10) by depositing a plurality of predetermined volume elements of at least one material having a predetermined refractive index, said intermediate optical element comprising a target ophthalmic lens (30) adjoined to an extra thickness (Se) consisting of a portion of said plurality of volume elements; and
- after said additive manufacturing step, subtractively manufacturing (300) by machining said target ophthalmic lens (30) from said intermediate optical element (10), the machining being carried out in a predetermined sequence, of at least one step, said predetermined sequence allowing said extra thickness to be subtracted,
said additive manufacturing step (100) comprising a step (113) of determining a manufacturing settings for said intermediate optical element (10) in which said extra thickness (Se) is determined depending on said predetermined sequence defined in the subtractive manufacturing step (300).

2. Process according to Claim 1, **characterized in that** the extra thickness (Se) generated in the additive manufacturing step (100) leading to the intermediate optical element (10) and then subtracted in the subtractive manufacturing step (300) leading to the target ophthalmic lens (30) is comprised between 1 µm and 1000 µm inclusive and preferably comprised between 30 µm and 1000 µm inclusive.

3. Process according to Claim 1 or 2, **characterized in that** said predetermined sequence comprises at least one step chosen from a roughing step, a finishing step and a polishing step, alone or in combination.

4. Process according to Claim 3, **characterized in that** said predetermined sequence is chosen from:
- a roughing step carried out on the intermediate optical element (10) leading to an intermediate optical element of state 2, followed by a finishing step carried out on said intermediate optical element of state 2 leading to an intermediate optical element of state 3, followed by a polishing step carried out on said intermediate optical element of state 3 leading to the target ophthalmic lens (30); or
- a finishing step carried out on the intermediate optical element (10) leading to an intermediate optical element of state 4, followed by a polishing step carried out on said intermediate optical element of state 4 leading to the target ophthalmic lens (30); or
- a polishing step carried out on the intermediate optical element (10) leading to the target ophthalmic lens (30).

5. Process according to Claim 3 or 4, **characterized in that** said predetermined sequence is identical or different everywhere on the intermediate optical element (10).

6. Process according to one of Claims 1 to 5, **characterized in that** the step (100) of additively manufacturing an intermediate optical element (10) comprising the target ophthalmic lens (30) adjoined to an extra thickness (Se) is carried out by depositing a plurality of predetermined volume elements of a given constituent material of the target ophthalmic lens and extra thickness.

7. Process according to one of Claims 1 to 5, **characterized in that** the step (100) of additively manufacturing an intermediate optical element (10) comprising the target ophthalmic lens (30) adjoined to an extra thickness (Se) is carried out by depositing a plurality of predetermined volume elements of at least two different materials, the materials especially differing in their refractive index or in their intrinsic abradability.

8. Process according to any one of Claims 1 to 7, **characterized in that** said step (113) of determining a manufacturing settings for said intermediate optical element (10) includes the following steps:
- determining (105) target geometric characteristics for said ophthalmic lens from characteristics of said optical function to be given to said ophthalmic lens;
- determining (108) said extra thickness, from said determined target geometric characteristics and characteristics associated with said predetermined subtractive manufacturing sequence; and
- deducing (109) the geometric characteristics of said intermediate optical element (10) from said determined target geometric characteristics and from said determined extra thickness (Se).

9. Process according to Claim 8, **characterized in that** the step (108) of determining said extra thickness furthermore includes taking into account material physical data associated with said predetermined subtractive manufacturing sequence.

10. Process according to Claim 8, **characterized in that** said optical function to be given to said ophthalmic lens is characteristic of prescription values associated with a wearer of said ophthalmic lens and complementary fitting data of a predetermined frame and/or personalization data and/or frame-shape data.

11. Process according to one of the preceding claims, in which the intermediate optical element (10) has an outline substantially equal to an outline configured to be inserted into a predetermined frame.

12. System for manufacturing an ophthalmic lens, including an additive manufacturing machine (1) and at least one subtractive manufacturing machine (21), in order to manufacture an ophthalmic lens, and at least one command/control unit (2, 22) provided with system elements (3, 4, 5, 23, 24, 25) configured to run a computer program comprising instructions configured to implement each of the steps of the process according to any one of Claims 1 to 11.

13. Manufacturing system according to Claim 12, furthermore comprising a varnishing machine configured to deposit a varnish on the element output by the subtractive manufacturing machine.

14. Manufacturing system according to Claim 12, in which the additive manufacturing machine comprises a manufacturing holder (12), which manufacturing holder is removable and configured to serve as a manufacturing holder for the subtractive manufacturing machine (32).
